# EUROPEAN PATENT SPECIFICATION

(11) **EP 1 071 987 B1**
(45) Date of publication and mention of the grant of the patent: **12.02.2003**
(21) Application number: 99909436.0
(22) Date of filing: 25.02.1999
(51) Int. Cl.: G05D 23/19

(54) **DEVICE AND METHOD FOR HEATING A VEHICLE SEAT**
VERFAHREN UND VORRICHTUNG ZUR HEIZUNG EINES FAHRZEUGSITZES
DISPOSITIF ET PROCEDE DE CHAUFFAGE D'UN SIEGE DE VEHICULE

(30) Priority: 13.03.1998 SE 9800845
(43) Date of publication of application: 31.01.2001
(73) Proprietor: Kongsberg Automotive AB, 565 28 Mullsjö (SE)
(72) Inventor: FRISTEDT, Tommy, S-560 25 Bottnaryd (SE)
(74) Representative: Andersson, Per Rune
(86) International application number: SE9900261
(87) International publication number: WO99046654

(56) References cited:
- WO-A1-98/01798
- US-A- 4 411 385

## Description

### TECHNICAL FIELD:

The present invention relates to a device for heating a vehicle seat, according to the preamble of appended claim 1. In particular, the invention can be applied in motor vehicles, for heating electrically heatable seats for occupants in the vehicle. The invention also relates to a method for heating such a vehicle seat, according to the preamble of appended claim 11.

### TECHNICAL BACKGROUND OF THE INVENTION:

For reasons of comfort and safety, electrically heatable seats are used in modern vehicles. Both the driver's seat and the other seats can be so arranged that they can be heated by means of special heating elements in the form of electrically conducting wires which are placed in the shape of a heating coil in each seat. Such a heating element is normally placed in the cushion and the back-rest of each seat when manufacturing the seat. The heating element is furthermore connected to a current feeding unit which delivers current. In this manner, the heating element can be heated to a suitable temperature.

A problem of previously known heating elements is caused by the desire for each seat to have a carefully adjusted temperature on its surface, i.e. on that surface which is in contact with the person sitting in the seat. For this purpose, the temperature of the heating element can be controlled by means of a temperature detector which is arranged in the close vicinity of the heating element, and which is connected to a central control unit. Using the temperature detector and the control unit, the current temperature can be detected. The control unit also comprises current feeding circuits which, for example, can be based on transistor or relay technology, for the feeding of current to the heating element. In this way, the central control unit is arranged to feed a certain current to the heating element until a certain desired value for the temperature is reached. The setting of this desired value can be done by means of fixed resistances or by means of an adjustable potentiometer, which is adjusted by a person travelling in the vehicle.

Using the above described control method, current can be delivered to the heating element until the central control unit indicates that the desired value has been reached. When this happens, the control unit will interrupt the feeding of the current. This causes the heating element to gradually cool down. When the heating element has cooled so that its temperature again falls below the desired value, current feeding to the heating element will be resumed. In this way, the temperature control will continue for as long as the system is operative.

Although previously known systems normally provide a reliable heating and temperature control for a vehicle seat, they may imply certain disadvantages. One such disadvantage relates to the fact that previously known systems demand unique temperature switches, a unique wiring and unique electronics units for all different variations of switches (for example On/Off, Off/Low/High, Off/Low/Medium etc.) which may occur in different seat types and vehicle types. This results in extensive and complicated wiring arrangements between the control unit of the heating element and the various switches. Furthermore, the previously known systems require that the control unit of the heating element comprise a particular hardware for different configurations of switches.

Another disadvantage related to previously known system relates to the fact that the heating element is normally mounted in the vehicle seat already during the manufacturing thereof. In this regard, the heating element is adapted to a particular "standard seat", i.e. a seat type of a predetermined kind having a particular design, upholstery etc. Consequently, the vehicle seat comprises a heating element for the purpose of heating the surface of the seat to a particular desired temperature. However, during assembly of the complete vehicle the manufacturer might choose to equip the vehicle seat in question with, for example, a completely different upholstery, for example a considerably thicker upholstery than that of said "standard" vehicle seat, i.e. an upholstery which differs from that for which the temperature control was originally intended. The temperature value which is detected by the temperature sensor will reach the set desired value when the heating element has reached the desired temperature, but since an abnormally thick upholstery is mounted on the seat, the temperature on the surface of the seat will be too low. This situation thus causes an undesired deviation during the temperature control.

The document WO 98/01798 concerns heating of a seat in a vehicle, and describes how a control unit communicates with a central computer unit, which central computer unit preferably is an existing computer in the vehicle, for example in the climate control system or in the ignition system.

The document US A 4411385 concerns control of a heater in a vehicle, run by electric power or gasoline. A controller is provided, containing various control and regulations programs for the heater, and selection capability for selecting the desired program. A control panel is also provided for communication with said controller.

### SUMMARY OF THE INVENTION:

A main object of the present invention is thus to provide an improved heating of a seat in a vehicle, where the above-mentioned drawbacks have been eliminated. This is obtained by means of a device of the initially mentioned kind, the characteristics of which will become evident from appended claim 1. This object is also obtained by means of a method of the initially mentioned kind, the characteristics of which will become evident from appended claim 11.

The device according to the invention is intended for heating a vehicle seat which comprises a heating element which is connected to a control unit. The control unit comprises current feeding means for the feeding of a current through the heating element for the heating thereof. Furthermore, a temperature sensor is connected to said control unit for detection of the temperature in connection to said heating element, wherein the control unit is adapted for feeding said current if a measured temperature is lower than a predetermined desired temperature. The control unit also comprises a communication unit for receiving information from an external operating unit via a transmission channel for the transfer of said information. In accordance with the invention, the operating unit is connected to at least one functional unit for operating said control unit by means of the transferred information. In this regard, the operating unit comprises programmed logic functions for generating said information, at least depending on the state of said functional unit, and programmed functions for transmitting said information to the communication unit.

The operating unit used in accordance with the invention allows for a simplified device and a simplified method for heating a vehicle seat being provided. By means of the invention, an economically advantageous solution is provided due to the fact that the operating unit can be manufactured from relatively low-cost, standard electronics components in a highly compact design, and can thereafter be programmed in order to provide the necessary functions for example for the vehicle type or vehicle seat in question.

The device according to the invention preferably operates entirely standing alone with respect to a central computer unit or the like in a motor vehicle, and consequently does not require any particular adaption of such a computer unit. The device and the method according to the invention is based on a modular concept in which a high degree of flexibility is obtained by means of a few standardized and uncomplicated electronics components.

According to an advantageous embodiment, the information comprises information related to the desired temperature, wherein the operating unit is arranged to generate said information based on data stored in the operating unit related to the design of the vehicle seat.

The device according to the invention provides a very high degree of reliability, due to the fact that most of the components forming part of the invention can be integrated on a few integrated circuits.

Advantageous embodiments will become apparent from the appended dependent claims.

### BRIEF DESCRIPTION OF THE DRAWINGS:

The invention will in the following be described in connection to an example of a preferred embodiment and the appended drawings, in which:
- Fig. 1: is a principal circuit diagram which shows a device according to a first preferred embodiment of the present invention,
- Fig. 2: in principle shows a measuring bridge which is utilized when measuring temperature according to the invention,
- Fig. 3: schematically shows how the data transfer according to the invention is carried out, and
- Fig. 4: is a further principal circuit diagram which shows a device according to a second preferred embodiment of the present invention.

### PREFERRED EMBODIMENTS:

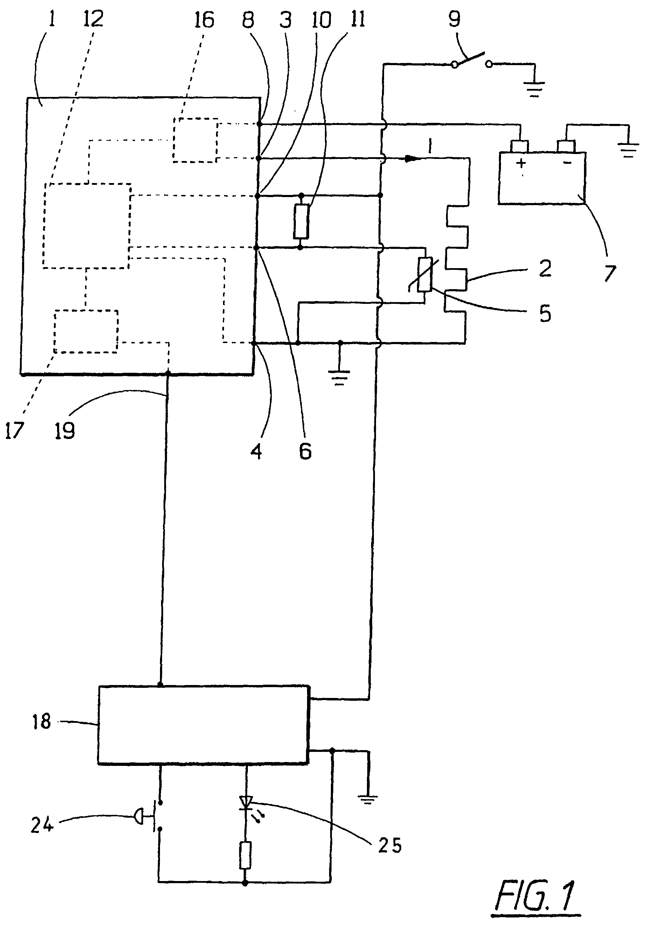

Fig. 1 shows the principle of a circuit diagram of a device according to a first preferred embodiment of the present invention. According to the first embodiment, the invention is intended to be utilized in connection with electrically heatable vehicles seats in vehicles. The figure shows in principle a control unit 1, the internal components and connections (which will be described in detail below) of which are shown with broken lines. The figure does not show all of the components of the control unit 1, but only those parts which are necessary for the understanding of the invention.

The control unit 1 is arranged to feed a certain current I through a heating element 2. This heating element 2 is, as such, of an essentially known kind, and consists of an electrical conductor which with its electrical resistance forms a heating coil. The heating element 2 is arranged inside a vehicle seat (not shown), preferably in its seat cushion. In principle, the heating element 2 can also be placed in the back-rest of the vehicle seat. Although the figure only shows one heating element 2, it is possible to connect several such elements to the control unit 1, for example in the form of a separate heating element for the seat cushion of the vehicle seat and a heating element for the back-rest of the vehicle seat. In cases where more than one heating element is used, these can be connected to the control unit either in parallel or in series.

As shown in Fig. 1, the heating element 2 is connected to the control unit 1 via two connections 3 and 4, respectively, of which the latter is also connected to ground via a connection in the vehicle chassis.

In connection to the heating element 2 there is arranged a temperature sensor 5 which is electrically connected to the control unit 2 via the above-mentioned grounded connection 4 and a further connection 6. The temperature sensor 5 preferably consists of a thermistor of the NTC ("Negative temperature coefficient") type, which presents a temperature dependent resistance R_{T} which corresponds to the temperature T which is present in the vicinity of the heating element 2. The detection using the temperature sensor 5 will be described in detail below.

There is furthermore a current source 7 connected to the control unit 1 via a further connection 8. The current source 7 preferably consists of the starting battery of the vehicle. The system also comprises an on/off switch 9, which preferably is integrated in the ignition lock (not shown) of the vehicle. The switch 9 is connected to a further connection 10 of the control unit 1. The control unit 1 is arranged to be able to be activated and thus permit heating of the heating element 2 when the switch 9 is closed.

A resistor 11 with a predetermined resistance Rₛₑₜ is connected between the connection 10, to which the switch 9 is connected, and the nongrounded connection 6, to which the temperature detector 5 is connected. As will be described in detail below, the resistor 11 is intended to be utilized in the temperature control of the heating element 2.

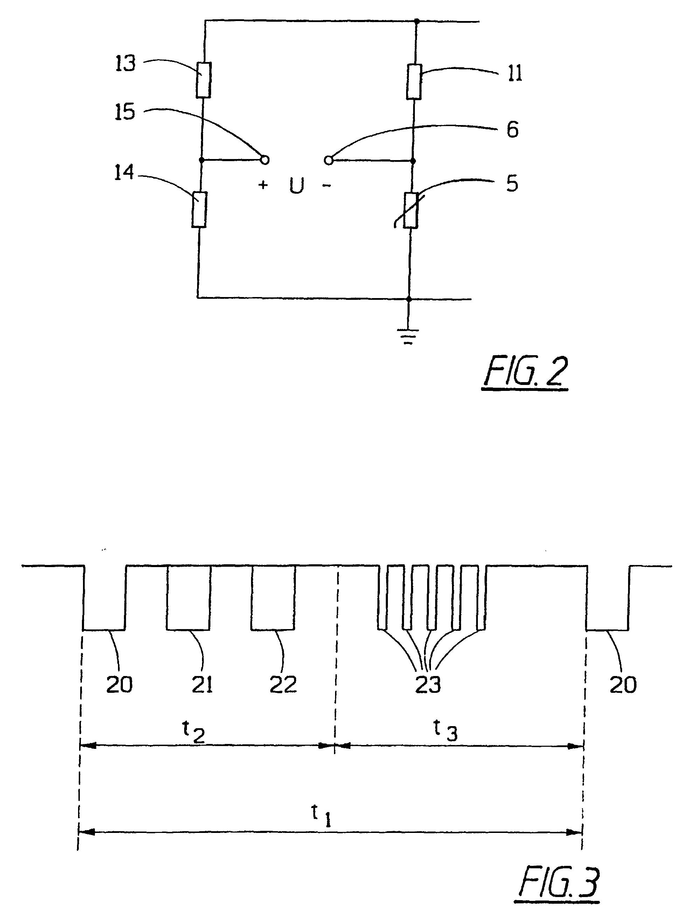

In the following, the design and main functions of the control unit 1 will be described. The control unit 1 comprises a logic part 12 which preferably is computer based, but which can also consist of known electronics circuits. The logic part 12 is connected to the above-mentioned connections 4, 6 and 10, and is arranged to detect the prevailing temperature T of the temperature sensor 5. This detection uses a measuring bridge of the kind which is principally shown in Fig. 2. The measuring bridge is of the Wheatstone-bridge kind, and comprises the resistor 11 and the temperature sensor 5, which have the resistances Rₛₑₜ and R_{T}, respectively. The measuring bridge furthermore comprises two further resistors 13 and 14 respectively, which preferably are integrated components in the logic part 12, but which are not shown separately in Fig. 1. The resistors 13, 14 have the resistances R₁₃, R₁₄, respectively.

The measuring bridge furthermore comprises (as shown in Fig. 2) two connections, between which there is a certain voltage U. One of these connections corresponds to the connection 6 of Fig. 1, while the other connection 15 is an integrated part of the logic part 12. The logic part 12 is arranged to measure the voltage U when detecting the temperature T of the temperature sensor 5. In case of balance in the measuring bridge, i.e. when the voltage U equals zero, the single unknown resistance, i.e. the resistance R_{T}, of the temperature sensor 5 can be computed using known formulae. In this way, the logic part 12 can compute a value of the resistance R_{T}, which in turn can be converted to a value of the current temperature T.

With renewed reference to Fig. 1, it can furthermore be seen that the control unit 1 comprises a switching unit 16 which, depending on signals from the logic part 12, feeds the current I through the heating element 2. The switching unit 16, which is connected to the above-mentioned connections 3 and 8, is preferably based on a MOSFET-transistor, which is a semi-conductor component which in an effective manner can deliver large currents from the current source 7 to the heating element 2.

The logic part 12 is thus arranged to determine a value of the prevailing temperature T. If the temperature T falls below a predetermined desired value T_{B}, which corresponds to a certain desired temperature on the surface of the seat of the vehicle, and which in general is determined by the choice of the resistances R₁₃, R₁₄, Rₛₑₜ, and by the basic resistance of the thermistor 5, the logic part 12 will control the switching unit 16 to deliver the current I to the heating element 2. When the desired value T_{B} is reached, the logic part 12 interrupts the feeding of current via the switching unit 16 to the heating unit 2.

The control unit 2 also comprises a communication unit 17. The purpose of said unit is primarily to ensure that the desired information, preferably related to the desired value T_{B} for the temperature control of the heating element 2, is transferred to the control unit 1 from an "intelligent" operating unit 18 via a transmission channel 19.

According to the invention, and the first embodiment, the "intelligent" operating unit is constituted by an external electronic operating unit 18, the operation of which is controlled by means of the above-mentioned switch 9. The operating unit comprises a programmable microprocessor (not shown) with a permanent memory, preferably of the EPROM type. The operating unit 18 is connected to at least one functional unit 24 for operating the control unit 1 by transferring information from the operating unit 18 to the communication unit 17.

The term functional unit is intended to describe various kinds of switching functions and the like which for example correspond to On/Off switches or the like in a conventional system. In the first embodiment, the operating unit 18 comprises only one functional unit 24, more precisely in the form of an Off/On switch with an indicator function in the form of a light emitting diode circuit 25. As is apparent from Fig. 1, the operation of the operating unit 18 is controlled by means of the above-mentioned switch 9.

Furthermore, the operating unit 18 comprises programmed logic functions for generating the information intended to be transferred to the communication unit 17. In this regard, the generation of the information is carried out at least depending on the state of the functional unit 24. The operating unit 18 also comprises programmed functions for transferring the information to the communication unit 17.

Consequently, the operating unit 18 is arranged in a manner so that the information which is delivered to the control unit 1 depends on the position of the switch 24. If, for example, the switch 24 is in its "Off" position, the information transferred to the communication unit 17 will correspond to a value which in turn corresponds to the fact that no current is fed through the heating element 2. Furthermore, the logic part 12 of the control unit 1 is preferably arranged so as to supply information which in turn corresponds to the operating unit 18 activating, alternatively shutting off, the light emitting diode circuit 25 depending on the prevailing position of the switch 24.

According to the first embodiment, a pull-up resistance (not shown) is furthermore arranged integrated with the control unit 1. More precisely, this resistance is arranged as a terminating resistor on the transmission channel 19.

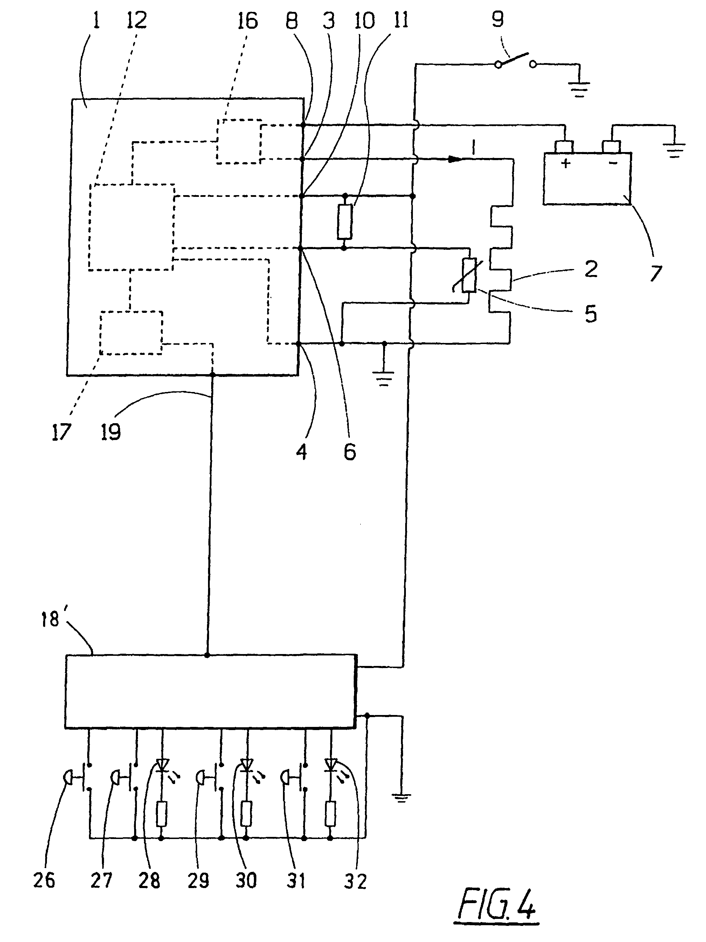

Fig. 4 shows a second preferred embodiment of a device according to the present invention. According to this embodiment, the device also comprises a control unit 1 of the same type as the first embodiment.

According to the second embodiment, the control unit 1 communicates with an operating unit 18' of a kind which is characteristic for the invention, the communication also in this embodiment taking place via a transmission channel 19 of a kind which is similar to the first embodiment. According to the second embodiment, the information being transferred from the operating unit 18' also comprises information related to the desired set temperature. In this regard, the information is generated by means of the operating unit 18' based on data stored in the operating unit 18', which data is related to the design of the vehicle seat.

According to the second embodiment, the operating unit 18' is connected to a considerably more complex configuration of switches (funtional units) than the embodiment shown in Fig. 1, i.e. Off/On, Off/Low/Medium/High power 26, 27, 29, 31, and having indicators in the form of light emitting diode circuits 28, 30, 32 for the Low/Medium/High functions.

All transfer of information between the control unit 1 and the operating unit 18, 18' is carried out via the transmission channel 19, which is preferably in the form of an electric cable.

As shown in Fig. 3, the transfer of information between the control unit 1 and the operating unit 18, 18' is controlled according to a periodic sequence with a certain predetermined period t₁. The transfer of information is based on the principle of transferring information which corresponds to actuating or interrupting a functional unit 24; 26, 27, 29, 31, or preferably corresponds to a particular desired value of the set value temperature T_{B}, from the operating unit 18; 18' to the control unit 1. Preferably, there is also a transfer of information in the opposite direction, i.e. from the control unit 1 to the operating unit 18, 18'. This additional information from the control unit 1 can suitably comprise status information. During the total period of time t₁, transfer takes place from the control unit 1 to the operating unit 18; 18' during a certain period of time t₂, whereas transfer from the operating unit 18; 18' to the control unit 1 takes place during another period of time t₃.

Fig. 3 thus shows a certain period for the transfer of information. According to invention, the transfer of information is initiated by a start-bit 20 being transferred from the control unit 1 to the operating unit 18; 18'. To this end, the communication unit 17 comprises an oscillator circuit (not shown) which is known per se and which is arranged to be able to periodically emit pulses via the connection 19. The operating unit 18; 18' furthermore comprises, in a known manner, a detection circuit (not shown) for the detection of pulses via the connection 19. The transfer of a start-bit 20 from the control unit 1 initiates a certain period, and indicates that the control unit 1 is ready for operation, and that feeding of current to the heating element 2 can take place.

Subsequent to the transfer of the start-bit 20 there is, where used, a transfer of one or two status bits 21, 22, respectively, from the control unit 1. The first status-bit 21 will be transferred if the heating element 2 is "active", i.e. if there is feeding of current to the heating element 2. In this case, a negative pulse is thus transferred, as indicated in the drawing. The second status-bit 22 will furthermore be transferred (in the form of a negative pulse) if there is a malfunction in the heating element 2. Examples of malfunctions which might occur are that some part of the heating element 2 has been short-circuited, or that the conductor which constitutes the heating element 2 has been broken. The start-bit 20 and the two status-bits 21, 22 can thus be transferred during a time interval t₂ which is defined in advance, and thus deliver information regarding the current status of the heating element 2 to the operating unit 18; 18'. The transfer of the bits 20, 21, 22 is asynchronous, i.e. the pulses are counted by the operating unit 18; 18', which thus constitutes the receiving side.

The next phase of a particular period is preferably constituted by the transfer of a desired set value T_{B} for temperature control of the heating element 2. This desired value is transferred from the operating unit 18; 18' to the control unit 1. To this end, a transfer of a number of pulses 23 from the operating unit 18; 18' takes place during the period of time t₃. To be precise, the transfer takes place via the connection 19 and the communication unit 17 to the logic part 12 (see Fig. 2). Furthermore, the communication unit 17 is also equipped with a detection circuit (not shown) for counting the number of pulses 23. According to the invention, the number of pulses 23 preferably corresponds to a certain desired temperature value T_{B} for the temperature control of the heating element 2. By way of example, Fig. 3 shows five pulses 23 being transferred. This might correspond to a desired value T_{B} which, for example, can amount to 35° C, which in turn corresponds to a certain desired temperature on the surface of the vehicle seat. If, for example, a desired value of 36° C is desired, six pulses 23 can for example be transferred.

The desired value T_{B} is transferred to the logic part 12 in the control unit 1. With reference to Figs. 1 and 2, it can now be seen that a given desired value T_{B} corresponds to a certain expected resistance R_{T} of the temperature sensor 5. This corresponds to the logic part 12 changing the values of the resistances R₁₃ and R₁₄, which cause balance in the measuring bridge (see Fig. 2) at the prevailing desired temperature. This can be done by means of switching transistors (not shown) in the logic part 12 which switch between different resistance values in a resistance ladder (not shown). The resistance Rₛₑₜ of the resistor 11 is not affected by which desired value T_{B} is transferred. When the correct temperature has been reached, the resistance R_{T} of the temperature sensor 5 will be of such a magnitude that balance is reached in the measuring bridge. This corresponds to the desired value T_{B} having been reached.

Consequently, the operating unit 18; 18' is suitably arranged to deliver information regarding a desired set temperature value T_{B}. In this manner, a correct control of the heating element 2 is obtained regardless of, for example, the upholstery of the vehicle seat used. The operating unit 18; 18' can already when manufacturing the vehicle be provided with information regarding the type of seat, which in turn gives accurate information regarding prevailing desired values. In this regards, a compensation for example for different types of upholstery for the vehicle seat in question can be done.

The logic unit 12 is arranged to also detect the case where no pulse 23 at all is transferred during the period of time t₃. This is interpreted as a "reset" signal by the logic part 12, and causes any ongoing current feeding to the heating element to cease. Furthermore, this preferably leads to the entire logic part 12 being set to zero, i.e. flip-flops, switches, registers and counters are set to zero. For example, error flip-flops which detect short-circuits in the heating element 2 are set to zero. In this way, intermittent malfunctions can be detected. Preferably, the system is also shut off, thereby causing any heating to be ceased, if there is reception of too many pulses, i.e. a number of pulses which exceeds the highest possible desired temperature.

As can be understood from the above description, the communication between the operating unit 18; 18' and the control unit 1 is of the serial kind. This means that only one connection is necessary between the operating unit 18; 18' and the control unit 1, which leads to a considerably more simple wiring and which in turn reduces the costs in connection with the invention.

The duration of the periods of time t₁, t₂ and t₃ may vary, and depends amongst other things on how the oscillator circuit in the communication unit 17 is designed. Preferably a period length t₁ is used (i.e. the time between two start pulses 20) which is of the order of size 600 to 1000 ms, the period of time t₂ being about 100-200 ms and the period of time t₃ being about 500-800 ms. In this way, the period of time t₂ constitutes approximately 10-30% of the total period of time t₁, while the period of time t₃ constitutes about 70-90% of an entire period. The operating unit 18; 18' detects the start of a certain period by detecting the start-bit 20. The operating unit 18; 18' can also compute the period of time t₁ by measuring the time which elapses between two start-bits 20. By knowing during which part of the period of time t₁ information regarding the status of the heating element is expected to be received, the pulses 21 and 22 can be detected. Subsequent to this, a certain number of pulses 23 can be transferred during the period of time t₃. This means that the operating unit 18; 18' does not necessarily have to be synchronized with the communication unit 17.

The logic part 12 is preferably arranged so that data which is received from the operating unit 18; 18', i.e. data which suitably corresponds to a particular desired set value T_{B} for the above-mentioned temperature control, is given a limited validity time. This corresponds to the fact that data transferred to the logic part 12 can only be utilized for temperature control of the heating element during a certain limited period of time. This maximum period of time can vary, but is preferably set to a value tₘₐₓ which corresponds to a few periods (having the period time t₁) according to the sequence shown in Fig. 3. If the logic part receives a certain desired value T_{B} and subsequently does not receive any new set value within a time period which corresponds to said value tₘₐₓ, the logic part 12 will interrupt the feeding of current to the heating element 2 (alternatively decrease the current feeding sharply, to a predetermined level). In this manner, possible erroneous data being transferred to the logic part 12, for example as a consequence of possible errors which arise in the transmission channel 19 or in the transfer of data, does not give rise to an erroneous desired value being used for a considerable time for the temperature control of the heating element 2. This is obviously an advantage as regards safety related to the invention, which can be utilized so as to prevent an erroneous heating of the heating element 2.

The components forming part of the control unit 1 can, using modern technology, be integrated into one single application specific integrated circuit (ASIC), which provides a very high reliability of the invention. In so doing, the communication unit 17, the logic part 12 and the switching unit 16 are preferably arranged on the same silicon chip. Alternatively, the various circuits can be assembled on separate silicon chips but in the same circuit, i.e. in the same capsule.

Also the operating unit 18; 18' is preferably constituted by a single silicon chip on which all the logic functions for the generation of information 23 which is intended to be transferred to the communication unit 17 has been programmed.

The operating unit 18; 18' being used according to the invention is connected during its assembly, or is provided during the manufacturing thereof, with suitable control knobs, buttons or the like, so as to influence the different functional units 24; 26, 27, 29, 31.

Furthermore, the operating unit 18; 18' can be connected to, or may during the manufacturing thereof be equipped with, a suitable display unit such as for example a series of light emitting diodes (for example the light emitting diode circuits 25 and 28, 30, 32, respectively). Alternatively, the control knobs or buttons being connected to the operating unit 18; 18' for the different functional units 24; 26, 27, 29, 31 can be provided with a suitable temperature scale.

The invention is not limited to that which has been described above, but various embodiments are possible within the scope of the claims. For example, different kinds of temperature sensors can thus be utilized, for example thermistors with a negative or positive temperature coefficient. An existing temperature sensor in the vehicle which is used for heating the compartment can also, in principle, be used. The switching unit 16 can furthermore be based on, for example, MOSFET or relay technology.

The information intended to be transferred from the control unit 1 to the operating unit 18; 18' (according to the above-mentioned embodiments the corresponding bits 20, 21 and 22) can, as mentioned above, be constituted by status information, that is, information describing the condition of the heating element 2. Furthermore, this transferred information can be constituted by diagnostic information, i.e. information defining whether an error has occured for example on the heating element 2, the temperature sensor 5 or the control unit 1, or if possible interruptions or short-circuits are present. Such status information can preferably be indicated by means of light emitting diodes being connected to the operating unit 18; 18', or on a simple indicator unit of other suitable type, such as an LCD display.

It should be noted that the invention can also be utilized in the case where no start and status information (i.e. bits 20, 21 and 22) is transferred from the control unit 1. This corresponds to the existence of one-way communication from the operating unit 18; 18' to the control unit 1. The minimum of information which must be transferred from the operating unit 18; 18' is a series of pulses 23 which is transferred within a certain interval of time and which indicates the condition of a functional unit 24; 26, 27, 29, 31 and suitably also a desired set value T_{B} for the temperature control. Furthermore, said desired value T_{B} does not necessarily have to be transferred in a manner in which the number of pulses determines a particular temperature value. Alternatively, coded signals may be transferred, wherein a particular digital word corresponds to a given temperature value.

Embodiments in which a compensation of the desired value is carried out in the operating unit 18, 18' in such a manner that a certain addition ΔT_{B} is added to the original desired value T_{B} are also possible. Due to this addition ΔT_{B}, which is suitable if there is an abnormally thick upholstery or an abnormally long distance from the heating element to the surface of the seat, a compensation takes place, so that the heating element as such is heated to a higher temperature than would have been the case otherwise. For the user who sits on the seat, no difference is perceived, i.e. the user perceives the "normal" temperature which corresponds to the original desired value T_{B}. This technology is described in the international patent application no. PCT/SE97/01172, filed by the applicant of the present application.

If status information or diagnostic information is transferred from the control unit 1, the number of information bits does not necessarily need to be two, but may vary depending on the information which is intended to be transferred from the control unit 1.

The connection 19 can consist of an electrical cable, an optical cable or a radio connection.

## Claims

1. Device for heating a vehicle seat comprising a heating element (2) arranged in relation to the vehicle seat and connected to a control unit (1) which comprises current feeding means (7, 16) for the feeding of a current (I) through the heating element (2) for the heating thereof, a temperature sensor (5) connected to said control unit (1) for detection of a temperature (T) related to that of said heating element (2), wherein the control unit (1) is adapted for feeding said current (I) if said detected temperature (T) is lower than a predetermined desired temperature (T_{B}), and the control unit (1) comprises a communication unit (17) for receiving data (23) from an external operating unit (18, 18') via a transmission channel (19),
**characterized in that** the external operating unit (18; 18') is connected to a number of controllable functional units (24; 26, 27, 29, 31) for inputting to the external operating unit (18; 18') information relevant to the operation of said control unit (1), and that the external operating unit (18; 18') comprises programmed logic functions for generating said data (23) at least depending on the state of said functional units (24; 26, 27, 29, 31), and that the external operating unit (18; 18') furthermore comprises programmed functions for transmitting said data (23) to said communication unit (17) via said transmission channel (19).

2. Device according to claim 1, wherein the data (23) comprises information related to said desired temperature (T_{B}), **characterized in that** the external operating unit (18; 18') is arranged so as to generate said data (23) based on data stored in the external operating unit (18; 18') and being related to the design of said vehicle seat.

3. Device according to claim 1 or 2, wherein the communication unit (17) is also adapted to transfer additional data (20, 21, 22) to the external operating unit (18; 18'), **characterized in that** the external operating unit (18; 18') is arranged to receive and indicate said additional data (20, 21, 22) and to indicate the condition of at least one of said functional units (24; 26, 27, 29, 31).

4. Device according to claim 3, **characterized in that** said additional data (20, 21, 22) comprises information (21, 22) related to the operational condition of said heating element (2) and/or said control unit (1).

5. Device according to claim 3 or 4, **characterized in that** said additional data comprises a start pulse (20) for initiating a periodical sequence during which data (21, 22, 23) is transferred.

6. Device according to any one of the preceding claims, **characterized in that** the control unit (1) comprises an oscillator circuit for transfer of pulses of a given periodicity, which pulses correspond to said data.

7. Device according to any of claims 2-6, **characterized in that** said control unit (1) is arranged so that received data (23) related to said desired temperature (T_{B}) is given a limited validity time (tₘₐₓ), after which said feeding of current (I) is decreased to a predetermined value.

8. Device according to any one of the preceding claims, **characterized in that** said control unit (1) comprises a logic part (12) and a switch unit (16) forming part of said current feeding means (7; 16), wherein the logic part (12), the switch unit and said communication unit (17) are arranged in the form of an integrated circuit.

9. Device according to claim 8, **characterized in that** the communication unit (17), the logic part (12) and/or the switch unit (16) are arranged on a common silicon chip.

10. Vehicle comprising a device according to any of the previous claims, **characterized in that** the external operating unit (18; 18') is constituted by one single silicon chip on which all said logic functions for the generation of said data (23) have been programmed.

11. Method for heating a vehicle seat comprising a heating element (2) connected to a control unit (1) which is arranged for feeding of a current (I) through the heating element (2), comprising:
detection of a prevailing temperature (T) in the vicinity of said heating element (2), and
feeding of said current (I) through the heating element (2) if said prevailing temperature (T) is lower than a predetermined desired temperature (T_{B}),
transfer of data (23) to said control unit (1) from an external operating unit (18, 18') via a transmission channel (19),
**characterized in that** the external operating unit (18; 18') is connected to a number of controllable functional units (24; 26, 27, 29, 31) for inputting to the external operating unit (18; 18') information relevant to the operation of said control unit (1), and that the external operating unit (18; 18') comprises programmed logic functions which generate said data (23) at least depending on the state of said functional unit (24; 26, 27, 29, 31), and that the external operating unit (18; 18') furthermore comprises programmed functions which transmit said data (23) to said communication unit (17) via said transmission channel (19).

12. Method according to claim 11, wherein the data (23) comprises information related to said desired temperature (T_{B}), **characterized in that** the external operating unit (18; 18') generates said data (23) based on data stored in the external operating unit (18; 18') and related to the design of said vehicle seat, and that said data (23) related to the desired temperature (T_{B}) is transferred in the form of a series of pulses, the number of which corresponds to a value of said desired temperature (T_{B}).

13. Method according to claim 12, **characterized in that** said data (23) related to said desired temperature (T_{B}) is given a limited validity time (tₘₐₓ), after which said feeding of current (I) is decreased to a predetermined value.

14. Method according to any one of claims 11-13, wherein also status data (21, 22) related to the operational condition of said heating element (2) is transferred from the control unit (1) to the external operating unit (18; 18'), **characterized in that** the external operating unit (18; 18') receives and indicates said additional data (20, 21, 22) and indicates the condition of at least one of said functional units (24; 26, 27, 29, 31).

15. Method according to any of claims 11-14, **characterized in that** diagnostic information related to possible errors of the control unit (1) and components connected thereto is also transferred from the control unit (1) to the external operating unit (18; 18').

16. Method according to any of claims 11-15, **characterized in that** said data (21, 22, 23) is transferred in the form of at least one pulse and in accordance with a periodical sequence which is controlled by said control unit (1).

17. Method according to claim 16, **characterized in that** each new period is indicated by means of a start pulse (20) which is transferred from said control unit (1).

18. Method according to claim 16 or 17, **characterized in that** said period has a duration which is equal to a predetermined first interval of time (t₁), wherein transfer of data (20, 21, 22) from the control unit (1) is carried out during a second interval of time (t₂) and transfer of information from the external operating unit (18; 18') is carried out during a third interval of time (t₃).

19. Method according to claim 18, **characterized** i n that that said second and third intervals of time (t₂, t₃) are controlled by the control unit (1).

20. Method according to claim 18 or 19, **characterized in that** the length of said second and third intervals of time (t₂, t₃) are controlled by the duration of the preceding first interval of time (t₁) and are calculated in the external operating unit (18; 18').

21. Method according to any of claims 18-20, **characterized in that** the second interval of time (t₂) constitutes 10-30% of said first interval of time (t₁) and the third interval of time (t₃) constitutes 70-90% of said first interval of time (t₁).

22. Method according to any of claims 12-21, **characterized in that** the number of pulses (23) related to the desired temperature (T_{B}) is within a predetermined interval which corresponds to different temperatures, wherein reception of too many or too few pulses (23) by said control unit (1) causes said current feeding to be interrupted.

23. Method according to any of claims 12-22, **characterized in that** the number of pulses (23) related to the desired temperature (T_{B}) is within a predetermined interval which corresponds to different temperatures, wherein reception of too many or too few pulses (23) which is received by said control unit (1) causes flip-flops, switches, registers and counters of said control unit (1) to be set to zero.

24. Method according to any of claims 11-23, **characterized in that** said data (21, 22, 23) is transferred serially via a transmission channel (19) between the control unit (1) and the external operating unit (18; 18').

## Patentansprüche

1. Vorrichtung zum Beheizen eines Fahrzeugsitzes, bestehend aus einem Heizelement (2), das in Bezug auf den Fahrzeugsitz ausgelegt und an eine Steuerungseinheit (1) angeschlossen ist, welche über Strömversorgungseinrichtungen (7, 16) zur Einspeisung eines Stroms (I) in das Heizelement (2) zu dessen Beheizung verfügt, aus einem an die Steuerungseinheit (1) angeschlossenen Temperatursensor (5) zur Erkennung einer Temperatur (T), die im Zusammenhang mit der Temperatur des Heizelements (2) steht, wobei die Steuerungseinheit (1) so ausgelegt ist, dass eine Einspeisung des Stroms (I) erfolgt, wenn die erkannte Temperatur (T) niedriger ist als eine festgelegte Solltemperatur (T_{B}), und die Steuerungseinheit (1) eine Kommunikationseinheit (17) zum Empfang von Daten (23) von einem externen Bedienungseinheit (18; 18') über einen Übertragungskanal (19) aufweist, **dadurch gekennzeichnet, dass** die externe Bedienungseinheit (18; 18') mit einer Anzahl steuerbarer Funktionseinheiten (24; 26, 27, 29, 31) zur Eingabe von für den Betrieb der Steuerungseinheit (1) relevanten Informationen in die externe Bedienungseinheit (18; 18') verbunden ist, dass die externe Bedienungseinheit (18; 18') über programmierte Logikfunktionen zur Erzeugung der Daten (23) verfügt, die zumindest vom Zustand der Funktionseinheiten (24; 26, 27, 29, 31) abhängen, und dass die externe Bedienungseinheit (18; 18') außerdem über programmierte Funktionen zur Übertragung der Daten (23) zur Kommunikationseinheit (17) über den Übertragungskanal (19) verfügt.

2. Vorrichtung entsprechend Anspruch 1, bei der die Daten (23) Informationen zur Solltemperatur (T_{B}) umfassen, **dadurch gekennzeichnet, dass** die externe Bedienungseinheit (18; 18') so ausgelegt ist, dass sie die Daten (23) auf der Grundlage von in der externen Bedienungseinheit (18; 18') gespeicherten Daten und im Zusammenhang mit der Gestaltung des Fahrzeugsitzes erzeugt.

3. Vorrichtung entsprechend Anspruch 1 oder 2, bei der die Kommunikationseinheit (17) außerdem so angepasst ist, dass zusätzliche Daten (20, 21, 22) zur externen Bedienungseinheit (18; 18') übertragen werden, **dadurch gekennzeichnet, dass** die externe Bedienungseinheit (18; 18') so ausgeführt ist, dass sie die zusätzlichen Daten (20, 21, 22) empfangen und signalisieren und den Zustand von zumindest einer der Funktionseinheiten (24; 26, 27, 29, 31) signalisieren kann.

4. Vorrichtung entsprechend Anspruch 3, **dadurch gekennzeichnet, dass** die zusätzlichen Daten (20, 21, 22) Informationen (21, 22) zum Betriebszustand des Heizelements (2) und/oder der Steuerungseinheit (1) umfassen.

5. Vorrichtung entsprechend Anspruch 3 oder 4, **dadurch gekennzeichnet, dass** die zusätzlichen Daten einen Startimpuls (20) zur Einleitung einer periodischen Sequenz umfassen, während derer die Daten (21, 22, 23) übertragen werden.

6. Vorrichtung entsprechend einem der vorherigen Ansprüche, **dadurch gekennzeichnet, dass** die Steuerungseinheit (1) eine Oszillatorschaltung zur Übertragung von Impulsen mit gegebener Periodizität umfasst, deren Impulse mit den Daten korrespondieren.

7. Vorrichtung entsprechend einem der Ansprüche 2 bis 6, **dadurch gekennzeichnet, dass** die Steuerungseinheit (1) so ausgeführt ist, dass den empfangenen Daten (23) zur Solltemperatur (T_{B}) nur eine beschränkte Geltungsdauer (Tₘₐₓ) zugeordnet wird, nach der die Einspeisung des Stroms (I) auf einen festgelegten Wert verringert wird.

8. Vorrichtung entsprechend einem der vorherigen Ansprüche, **dadurch gekennzeichnet, dass** die Steuerungseinheit (1) einen Logikteil (12) und eine Schalteinheit (16) aufweist, die Bestandteil der Stromversorgungseinrichtung (7, 16) sind, wobei der Logikteil (12), die Schalteinheit und die Kommunikationseinheit (17) in Form eines integrierten Schaltkreises ausgeführt sind.

9. Vorrichtung entsprechend Anspruch 8, **dadurch gekennzeichnet, dass** die Kommunikationseinheit (17), der Logikteil (12) und/oder die Schalteinheit (16) auf einem gemeinsamen Siliziumchip angeordnet sind.

10. Fahrzeug mit einer Vorrichtung entsprechend einem der vorherigen Ansprüche, **dadurch gekennzeichnet, dass** die externe Bedienungseinheit (18; 18') durch einen einzigen Siliziumchip gebildet wird, auf dem sämtliche Logikfunktionen für die Erzeugung der Daten (23) programmiert wurden.

11. Verfahren zum Beheizen eines Fahrzeugsitzes unter Einsatz eines Heizelements (2), das an eine Steuerungseinheit (1) angeschlossen ist, welche für die Einspeisung eines Stroms (I) in das Heizelement (2) ausgelegt ist, umfassend die folgenden Schritte:
Erkennung einer herrschenden Temperatur (T) in der Nähe des Heizelements (2), und
Einspeisung des Stroms (I) in das Heizelement (2), wenn die herrschende Temperatur (T) niedriger ist als eine festgelegte Solltemperatur (T_{B}),
Übertragung von Daten (23) von einer externen Bedienungseinheit (18; 18') über einen Übertragungskanal (19) zur Steuerungseinheit (1), **dadurch gekennzeichnet, dass** die externe Bedienungseinheit (18; 18') mit einer Anzahl steuerbarer Funktionseinheiten (14; 26, 27, 29, 31) zur Eingabe von für den Betrieb der Steuerungseinheit (1) relevanten Informationen in die externe Bedienungseinheit (18; 18') verbunden ist, dass die externe Bedienungseinheit (18; 18') über programmierte Logikfunktionen zur Erzeugung der Daten (23) verfügt, die zumindest vom Zustand der Funktionseinheiten (24; 26, 27, 29, 31) abhängen, und dass die externe Bedienungseinheit (18; 18') außerdem über programmierte Funktionen zur Übertragung der Daten (23) zur Kommunikationseinheit (17) über den Übertragungskanal (19) verfügt.

12. Verfahren entsprechend Anspruch 11, bei dem die Daten (23) Informationen zur Solltemperatur (T_{B}) umfassen, **dadurch gekennzeichnet, dass** die externe Bedienungseinheit (18; 18') die Daten (23) auf der Grundlage von in der externen Bedienungseinheit (18; 18') gespeicherten Daten und im Zusammenhang mit der Gestaltung des Fahrzeugsitzes erzeugt, und dass die Daten (23) zur Solltemperatur (T_{B}) in Form einer Reihe von Impulsen übertragen werden, deren Anzahl sich nach dem Wert der Solltemperatur (T_{B}) richtet.

13. Verfahren entsprechend Anspruch 12, **dadurch gekennzeichnet, dass** den Daten (23) zur Solltemperatur (T_{B}) nur eine beschränkte Geltungsdauer (Tₘₐₓ) zugeordnet wird, nach der die Einspeisung des Stroms (I) auf einen festgelegten Wert verringert wird.

14. Verfahren entsprechend einem der Ansprüche 11 bis 13, bei dem außerdem Zustandsdaten (21, 22) zum Betriebszustand des Heizelements (2) von der Steuerungseinheit (1) zur externen Bedienungseinheit (18; 18') übertragen werden, **dadurch gekennzeichnet, dass** die exteme Bedienungseinheit (18; 18') diese zusätzlichen Daten (20, 21, 22) empfängt und signalisiert und den Zustand von zumindest einer der Funktionseinheiten (24; 26, 27, 29, 31) signalisieren kann.

15. Verfahren entsprechend einem der Ansprüche 11 bis 14, **dadurch gekennzeichnet, dass** von der Steuerungseinheit (1) außerdem Diagnoseinformationen zu möglichen Fehlern der Steuerungseinheit (1) und der daran angeschlossenen Komponenten zur externen Bedienungseinheit (18; 18') übertragen werden.

16. Verfahren entsprechend einem der Ansprüche 11 bis 15, **dadurch gekennzeichnet, dass** die Daten (21, 22, 23) in Form von zumindest einem Impuls und entsprechend einer periodischen Sequenz übertragen werden, die durch die Steuerungseinheit (1) gesteuert wird.

17. Verfahren entsprechend Anspruch 16, **dadurch gekennzeichnet, dass** jede neue Periode mit Hilfe eines Startimpulses (20) signalisiert wird, der von der Steuerungseinheit (1) übertragen wird.

18. Verfahren entsprechend Anspruch 16 oder 17, **dadurch gekennzeichnet, dass** die Periode eine Dauer aufweist, die identisch ist mit einem festgelegten ersten Zeitintervall (t₁), wobei die Übertragung der Daten (20, 21, 22) von der Steuerungseinheit (1) während eines zweiten Zeitintervalls (t₂) erfolgt und die Übertragung der Informationen von der externen Bedienungseinheit (18; 18') während eines dritten Zeitintervalls (t₃) erfolgt.

19. Verfahren entsprechend Anspruch 18, **dadurch gekennzeichnet, dass** die zweiten und dritten Zeitintervalle (t₂, t₃) durch die Steuerungseinheit (1) gesteuert werden.

20. Verfahren entsprechend Anspruch 18 oder 19, **dadurch gekennzeichnet, dass** die Länge der zweiten und dritten Zeitintervalle (t₂, t₃) durch die Dauer des vorangehenden ersten Zeitintervalls (t₁) gesteuert und in der externen Bedienungseinheit (18; 18') berechnet werden.

21. Verfahren entsprechend einem der Ansprüche 18 bis 20, **dadurch gekennzeichnet, dass** das zweite Zeitintervall (t₂) 10 bis 30% des ersten Zeitintervalls (t₁) ausmacht, und dass das dritte Zeitintervall (t₃) 70 bis 90% des ersten Zertintervalls (t₁) ausmacht.

22. Verfahren entsprechend einem der Ansprüche 12 bis 21, **dadurch gekennzeichnet, dass** die Anzahl der Impulse (23) zur Solltemperatur (T_{B}) innerhalb eines festgelegten Intervalls liegt, das verschiedenen Temperaturen entspricht, wobei der Empfang von zu vielen oder zu wenigen Impulsen (23) durch die Steuerungseinheit (1) zu einer Unterbrechung der Stromeinspeisung führt.

23. Verfahren entsprechend einem der Ansprüche 12 bis 22, **dadurch gekennzeichnet, dass** die Anzahl der Impulse (23) zur Solltemperatur (T_{B}) innerhalb eines festgelegten Intervalls liegt, das verschiedenen Temperaturen entspricht, wobei der Empfang von zu vielen oder zu wenigen Impulsen (23) durch die Steuerungseinheit (1) dazu führt, dass die Flip-Flops, Schalter, Register und Zähler der Steuerungseinheit (1) auf null gesetzt werden.

24. Verfahren entsprechend einem der Ansprüche 11 bis 23, **dadurch gekennzeichnet, dass** die Daten (21, 22, 23) seriell über einen Übertragungskanal (19) zwischen der Steuerungseinheit (1) und der externen Bedienungseinheit (18; 18') übertragen werden.

## Revendications

1. Dispositif de chauffage d'un siège de véhicule, comprenant un élément de chauffage (2) disposé par rapport au siège de véhicule et connecté à une unité de commande (1) qui comporte un dispositif (7, 16) d'alimentation en courant destiné à transmettre un courant (I) à l'élément de chauffage (2) afin que celui-ci soit chauffé, un capteur (5) de température connecté à l'unité de commande (1) pour la détection d'une température (T) liée à celle de l'élément de chauffage (2), dans lequel l'unité de commande (1) est destinée à transmettre le courant (I) lorsque la température détectée (T) est inférieure à une température prédéterminée voulue (T_{B}), et l'unité de commande (1) comporte une unité de communication (17) destinée à recevoir des données (23) d'une unité externe opérationnelle (18, 18') par l'intermédiaire d'un canal de transmission (19), **caractérisé en ce que** l'unité opérationnelle externe (18, 18') est connectée à un certain nombre d'unités fonctionnelles (24 ; 26, 27, 29, 31) qui peuvent être commandées pour la saisie vers l'unité opérationnelle externe (18 ; 18') d'informations relatives au fonctionnement de l'unité de commande (1), et **en ce que** l'unité opérationnelle externe (18 ; 18') comporte des fonctions logiques programmées pour la création des données (23) qui dépendent au moins de l'état des unités fonctionnelles (24 ; 26, 27, 29, 31), et **en ce que** l'unité opérationnelle externe (18 ; 18') comporte en outre des fonctions programmées destinées à transmettre les données (23) à l'unité de communication (17) par l'intermédiaire du canal de transmission (19).

2. Dispositif selon la revendication 1, dans lequel les données (23) comportent des informations relatives à la température voulue (T_{B}), **caractérisé en ce que** l'unité opérationnelle externe (18 ; 18') est destinée à créer les données (23) en fonction de données mémorisées dans l'unité opérationnelle externe (18 ; 18') et liées à la réalisation du siège de véhicule.

3. Dispositif selon la revendication 1 ou 2, dans lequel l'unité de communication (17) est aussi destinée à transférer des données supplémentaires (20, 21, 22) à l'unité opérationnelle externe (18 ; 18'), **caractérisé en ce que** l'unité opérationnelle externe (18 ; 18') est destinée à recevoir et indiquer les données supplémentaires (20, 21, 22) et à indiquer l'état de l'une au moins des unités fonctionnelles (24 ; 26, 27, 29, 31).

4. Dispositif selon la revendication 3, **caractérisé en ce que** les données supplémentaires (20, 21, 22) comprennent des informations (21, 22) liées à l'état opérationnel de l'élément de chauffage (2) et/ou de l'unité de commande (1).

5. Dispositif selon la revendication 3 ou 4, **caractérisé en ce que** les données supplémentaires comportent une impulsion de démarrage (20) destinée à déclencher une séquence périodique pendant laquelle des données (21, 22, 23) sont transférées.

6. Dispositif selon l'une quelconque des revendications précédentes, **caractérisé en ce que** l'unité de commande (1) comporte un circuit oscillateur destiné à transférer des impulsions d'une périodicité déterminée, ces impulsions correspondant aux données.

7. Dispositif selon l'une quelconque des revendications 2 à 6, **caractérisé en ce que** l'unité de commande (1) est réalisée de manière que les données reçues (23), liées à la température voulue (T_{B}), aient un temps limité de validité (tₘₐₓ), après lequel la transmission du courant (I) est réduite à une valeur prédéterminée.

8. Dispositif selon l'une quelconque des revendications précédentes, **caractérisé en ce que** l'unité de commande (1) comporte une partie logique (12) et une unité de commutation (16) faisant partie du dispositif d'alimentation en courant (7 ; 16), dans lequel la partie logique (12), l'unité de commutation et l'unité de communication (17) sont disposées sous forme d'un circuit intégré.

9. Dispositif selon la revendication 8, **caractérisé en ce que** l'unité de communication (17), la partie logique (12) et/ou l'unité de commutation (16) sont disposées sur une pastille commune de silicium.

10. Véhicule comprenant un dispositif selon l'une quelconque des revendications précédentes, **caractérisé en ce que** l'unité opérationnelle externe (18 ; 18') est constituée par une seule pastille de silicium sur laquelle toutes les fonctions logiques de création des données (23) ont été programmées.

11. Procédé de chauffage d'un siège de véhicule comportant un élément de chauffage (2) connecté à une unité de commande (1) destinée à transmettre un courant (I) par l'intermédiaire de l'élément de chauffage (2), comprenant :
la détection d'une température régnante (T) au voisinage de l'élément de chauffage (2),
la transmission du courant (I) à l'élément de chauffage (2) lorsque la température régnante (T) est inférieure à une température prédéterminée voulue (T_{B}), et
le transfert de données (23) à l'unité de commande (1) depuis l'unité opérationnelle externe (18, 18') par l'intermédiaire d'un canal de transmission (19),
**caractérisé en ce que** l'unité opérationnelle externe (18 ; 18') est connectée à un certain nombre d'unités fonctionnelles (24 ; 26, 26, 27, 29, 31) qui peuvent être commandées, **en ce que** l'unité opérationnelle externe (18, 18') comporte des fonctions logiques programmées qui créent les données (23) qui dépendent au moins de l'état de l'unité fonctionnelle (24 ; 26, 27, 29, 31), et **en ce que** l'unité opérationnelle externe (18 ; 18') comporte en outre des fonctions programmées qui transmettent des données (23) à l'unité de communication (17) par l'intermédiaire du canal de transmission (19).

12. Procédé selon la revendication 11, dans lequel les données (23) comportent des informations relatives à la température voulue (T_{B}), **caractérisé en ce que** l'unité opérationnelle externe (18 ; 18') crée les données (23) d'après des données conservées dans l'unité opérationnelle externe (18 ; 18') et liées à la réalisation du siège de véhicule, et **en ce que** les données (23) liées à la température voulue (T_{B}) sont transférées sous forme d'une série d'impulsions dont le nombre correspond à la valeur de la température voulue (T_{B}).

13. Procédé selon la revendication 12, **caractérisé en ce que** les données (23) liées à la température voulue (T_{B}) ont une durée limitée de validité (tₘₐₓ) après laquelle la transmission d'un courant (I) est réduite vers une valeur prédéterminée.

14. Procédé selon l'une quelconque des revendications 11 à 13, dans lequel des données d'état (21, 22) liées à l'état opérationnel de l'élément de chauffage (2) sont transférées de l'unité de commande (1) à l'unité opérationnelle externe (18 ; 18'), **caractérisé en ce que** l'unité opérationnelle externe (18 ; 18') reçoit et indique les données supplémentaires (20, 21, 22) et indique l'état de l'une au moins des unités fonctionnelles (24 ; 26, 27, 29, 31).

15. Procédé selon l'une quelconque des revendications 11 à 14, **caractérisé en ce que** des informations de diagnostic liées à des erreurs possibles de l'unité de commande (1) et des éléments qui lui sont connectés sont aussi transférées de l'unité de commande (1) à l'unité opérationnelle externe (18 ; 18').

16. Procédé selon l'une quelconque des revendications 11 à 15, **caractérisé en ce que** les données (21, 22, 23) sont transférées sous forme d'au moins une impulsion et suivant une séquence périodique qui est commandée par l'unité de commande (1).

17. Procédé selon la revendication 16, **caractérisé en ce que** chaque nouvelle période est indiquée par une impulsion de début (20) qui est transférée depuis l'unité de commande (1).

18. Procédé selon la revendication 16 ou 17, **caractérisé en ce que** ladite période a une valeur égale à un premier intervalle prédéterminé de temps (t₁), tel que le transfert des données (20, 21, 22) depuis l'unité de commande (1) est réalisé au cours d'un second intervalle de temps (t₂) et le transfert des informations depuis l'unité opérationnelle externe (18 ; 18') est exécuté pendant un troisième intervalle de temps (t₃).

19. Procédé selon la revendication 18, **caractérisé en ce que** les second et troisième intervalles de temps (t₂, t₃) sont réglés par l'unité de commande (1).

20. Procédé selon la revendication 18 ou 19, **caractérisé en ce que** les longueurs des second et troisième intervalles de temps (t₂, t₃) sout réglées par la durée du premier intervalle de temps précédent (t₁) et sont calculées dans l'unité opérationnelle externe (18 ; 18').

21. Procédé selon l'une quelconque des revendications 18 à 20, **caractérisé en ce que** le second intervalle de temps (t₂) constitue 10 à 30 % du premier intervalle de temps (t₁) et le troisième intervalle de temps (t₃) constituent 70 à 90 % du premier intervalle de temps (t₁).

22. Procédé selon l'une quelconque des revendications 12 à 21, **caractérisé en ce que** le nombre d'impulsions (23) lié à la température voulue (T_{B}) est compris dans un intervalle prédéterminé qui correspond à des températures différentes, telles que la réception d'un nombre d'impulsions trop important ou trop petit (23) par l'unité de commande (1) provoque l'interruption de la transmission, du courant.

23. Procédé selon l'une quelconque des revendications 12 à 22, **caractérisé en ce que** le nombre d'impulsions (23) lié à la température voulue (T_{B}) compris dans un intervalle prédéterminé qui correspond à des températures différentes, et la réception d'un nombre d'impulsions (23) trop élevé ou trop faible reçues par l'unité de commande (1) provoquent la remise à zéro de bascules, de commutateurs, de registres et de compteurs de l'unité de commande (1).

24. Procédé selon l'une quelconque des revendications 11 à 23, **caractérisé en ce que** les données (21, 22, 23) sont transférées en série par l'intermédiaire d'un canal de transmission (19) placé entre l'unité de commande (1) et l'unité opérationnelle externe (18 ; 18').
